# EUROPÄISCHE PATENTANMELDUNG

(11) **EP 0 959 371 A2**
(43) Veröffentlichungstag der Anmeldung: **24.11.1999**
(21) Anmeldenummer: 99108426.0
(22) Anmeldetag: 12.05.1999
(51) Int. Cl.: G01V 8/10

(54) **Lichtgitterprofil**

(30) Priorität: 22.05.1998 DE 19823043
(71) Anmelder: INES Elektronik-Systementwicklung-Produktions GmbH, 84453 Mühldorf (Inn) (DE)
(72) Erfinder: Femböck, Josef, 84524 Neuötting (DE)
(74) Vertreter: Kirschner, Klaus Dieter, Dipl.-Phys.

(57) **Zusammenfassung**

Vorgesehen ist eine Vorrichtung für den Aufbau von Schutzsystemen, insbesondere Lichtgittern, Lichtschranken, Lichtvorhänge oder dergleichen, mit einem Gehäuse, in dem Einrichtungen für die Abgabe oder den Empfang von Erfassungssignalen angeordnet sind, wobei das Gehäuse ein auf der Innen- und Außenseite mit einer Mehrzahl von Aufnahmenuten für die Aufnahme von Bauteilen und -gruppen versehenes Profil ist, das über einen Teilbereich seines Querschnittes (12) offen ist. Das Profil (2) ist über lösbar mit dem Profil (2) zu verbindende Halteelemente (30, 32) am jeweiligen Montageort befestigt. Die jeweilige Verbindung zwischen Profil (2) und Halteelement (30, 32) ist derart ausgebildet, daß eine 360° Drehung des Profils (2) gegenüber dem Halteelement (30, 32) ermöglicht ist.

## Beschreibung

Die Erfindung bezieht sich auf eine Vorrichtung für den Einsatz bei der Installation von Schutzsystemen, insbesondere für Lichtgitter, Lichtschranken, Lichtvorhänge oder dergleichen, mit einem Gehäuse, in dem Einrichtungen für die Abgabe oder den Empfang von Erfassungssignalen angeordnet sind, und das ein auf der Innen- und Außenseite mit einer Mehrzahl von Aufnahmenuten für die Aufnahme von Bauteilen und -gruppen versehenes Profit ist, das über einen Teilbereich seines Querschnittes offen ist.

Es ist eine seit geraumer Zeit bekannte Vorgehensweise, für die Zugangs- und Bewegungsüberwachung Lichtgitter einzusetzen, bei denen in der Regel zwei gegenüberliegende Komponenten jeweils als ein optisches Signal abgebendes Element beziehungsweise als das optische Signal empfangendes Element angeordnet sind. Neben der reinen Bewegungs - oder Zugangsüberwachung im industriellen und privaten Bereich eignen sich diese Vorrichtungen insbesondere für den aktiven Arbeitsschutz, indem Maschinen mit sich bewegenden oder rotierenden Teilen, die eine große potentielle Verletzungsgefahr darstellen, unmittelbar angehalten oder gebremst werden, wenn eine Person oder ein Gegenstand das Lichtgitter durchdringt.

Die bekannten Vorrichtungen dieser Art bestehen dabei im allgemeinen aus den einander gegenüber angeordneten und ausschließlich die optischen Elemente aufnehmenden Komponenten sowie weiteren, die notwendige Elektronik aufnehmenden Komponenten, die getrennt von den die optischen Elemente aufnehmenden Komponenten sind und über entsprechende Kabelverbindungen miteinander verbunden sind.

Trotz der Vorteile, die Vorrichtungen dieser Art aufweisen, ist es diese Aufteilung der Vorrichtungen in separate, miteinander zu verbindende Einheiten, die oftmals als nachteilig empfunden wird, da erstens für die Anbringung beziehungsweise Unterbringung aller Komponenten Raum vorhanden sein beziehungsweise geschaffen werden muß, die Möglichkeiten der Anbringung aufgrund der Vielzahl der miteinander zu verbindenden Komponenten begrenzt sind und darüber hinaus die Verbindungen zwischen den einzelnen Komponenten anfällig sind und damit potentielle Fehlerquellen darstellen, die sich zum Beispiel im Falle des aktiven Arbeitsschutzes katastrophal auswirken können.

Der Hauptnachteil bei den bekannten Vorrichtungen dieser Art ist jedoch, daß die Vorrichtungen bei oder nach der Montage nur mit großem Aufwand ausgerichtet werden können. Es ist nämlich erwünscht, daß beispielsweise die beiden Profile einer Lichtschranke parallel zueinander in einer Ebene ausgerichtet werden können, was insbesondere dann schwierig ist, wenn der Montageort, beispielsweise ein Bauteil oder eine Wand, an der das Profil montiert werden soll, nicht eben ist. Selbst wenn der Montageort eben ist, kann die Ebene des Montageorts unter einem Winkel zu der Ebene stehen, in der die beiden Profile parallel zueinander montiert werden sollen.

Die Aufgabe der vorliegenden Erfindung ist es daher, eine Vorrichtung zu schaffen, mit deren Hilfe sich Lichtgitter ohne die Notwendigkeit einer umfangreichen Verkabelung oder Unterbringung einer Vielzahl von Komponenten aufbauen lassen, und die sich bei oder nach der Montage leicht ausrichten lassen.

Diese Aufgabe wird durch eine Vorrichtung der eingangs genannten Art gelöst, bei der das Profil über lösbar mit dem Profil zu verbindende Halteelemente am jeweiligen Montageort befestigbar ist, und bei der die jeweilige Verbindung zwischen Profil und Halteelement derart ausgebildet ist, daß eine Drehung des Profils um seine Längsachse gegenüber dem Halteelement ermöglicht ist. Damit lassen sich in vorteilhafter Weise die beiden Profile, die beispielsweise für einen Lichtvorhang oder ein Lichtgitter benötigt werden, in einfacher Weise bei oder nach der Montage aufeinander ausrichten, indem die beiden Profile solange aufeinanderzu gedreht werden, bis beispielsweise die Lichtstrahlen von Sendern, die in einem der Profile angeordnet sind, auf die entsprechenden Empfänger auftreffen, die in dem gegenüberliegenden Profil angeordnet sind. Die gegenüber den Halteelementen drehbare Ausbildung des Profils erlaubt neben einer einfachen Justierung ein lidartiges Drehen des Profils, um eine Reinigung, Wartung etc. auf einfache und vorteilhafte Weise zu ermöglichen.

Eine vorteilhafte Ausgestaltung der erfindungsgemäßen Vorrichtung ist dadurch gekennzeichnet, daß eine Drehung des Profils um 360 ° um seine Längsachse gegenüber dem Halteelement ermöglicht ist. Dadurch wird eine maxiamale Einstellung der Profile möglich.

Eine vorteilhafte Ausgestaltung der erfindungsgemäßen Vorrichtung ist dadurch gekennzeichnet, daß im Inneren des Profils über die Aufnahmenuten hinaus ein durch einen Profilsteg abgegrenzter Tunnel vorgesehen ist, der dem offenen Bereich des Profils gegenüber angeordnet ist, und daß der Profilsteg zur Abgrenzung des Tunnels in einem Bereich offen ist. Der Tunnel sorgt in vorteilhafter Weise dafür, daß, die Lichtstrahlen, die von dem gegenüberliegenden Profil kommen, Bauteile erreichen können, die in dem Tunnel liegen. Es ist lediglich erforderlich, die beiden Profile in der vorstehend genannten Weise aufeinander auszurichten.

Eine weitere vorteilhafte Ausgestaltung der erfindungsgemäßen Vorrichtung ist dadurch gekennzeichnet, daß der Profilsteg zur Abgrenzung des Tunnels zumindest auf der zum Tunnelinneren gerichteten Seite parabolförmig ausgebildet ist. Damit ist in vorteilhafter Weise eine Bündelung von ankommenden Lichtstrahlen möglich.

Eine weitere vorteilhafte Ausgestaltung der erfindungsgemäßen Vorrichtung ist dadurch gekennzeichnet, daß die Enden des Profils mit Abschlußkappen verschlossen sind, die das Profil bündig abschließen. Diese Abschlußkappen bilden in vorteilhafter Weise eine Grundlage für die Ausgestaltung der Halteeinrichtungen, um die Drehbarkeit der Profile zu gewährleisten.

Eine weitere vorteilhafte Ausgestaltung der erfindungsgemäßen Vorrichtung ist dadurch gekennzeichnet, daß die Abschlußkappen zwischen Profil und Halteelement angeordnet sind, wobei die Halteelemente ringförmig auf den Abschlußkappen aufsetzen. Dadurch wird in einfacher Weise die Drehbarkeit der Profile mit geringstem Bauaufwand gewährleistet.

Eine weitere vorteilhafte Ausgestaltung der erfindungsgemäßen Vorrichtung ist dadurch gekennzeichnet, daß das Halteelement und das Profil beziehungsweise die Abschlußkappe über ein Kugelgelenk miteinander verbunden sind. Durch die Verwendung des Kugelgelenkes ist es in vorteilhafter Weise möglich, die Profile beispielsweise auch dann in einer vorgegebenen Montageebene auszurichten, selbst wenn der Montageort, das heißt das Bauteil oder die Wand, an der das Profil montiert werden soll, nicht eben ist oder in einer Ebeneliegt, die unter einem Winkel zu der Montageebene steht.

Eine weitere vorteilhafte Ausgestaltung der erfindungsgemäßen Vorrichtung ist dadurch gekennzeichnet, daß die Winkelstellung des Profils über einen motorischen Antrieb verstellbar ist. Dadurch wird in vorteilhafter Weise die Möglichkeit geschaffen, die Nachjustierung der Drehlage der Profile auch nach der Montage von einer zentralen Stelle aus motorisch durchzuführen.

Die Vorrichtung bietet den Vorteil, daß sämtliche für den Betrieb eines Zugangsschutzsystemes notwendigen Komponenten in dem als Profil ausgebildeten Gehäuse untergebracht werden können. Auf diese Weise können verstreut angeordnete Komponenten sowie die für die Verbindung derselben notwendigen anfälligen Verkabelungen vermieden werden. Die Ausbildung des Gehäuses als vorzugsweise stranggepreßtes Profil machte darüber hinaus die Herstellung einfach und kostengünstig, was sich positiv auf die Kosten auswirkt, so daß die gesamte Vorrichtung zu einem günstigeren Preis angeboten werden kann, was letztendlich die Akzeptanz am Markt erhöht.

Aufgrund der Tatsache, daß das Profil auf der Außen- und Innenseite mit Nuten versehen ist, können sämtliche für den Betrieb der Vorrichtung notwendigen Bauteile in der Form von einschiebbaren Bauteilen, Baugruppen und Komponenten in die Vorrichtung integriert werden, so daß letztendlich eine kompakte Einheit entsteht, die nicht nur funktional sondern auch ästhetisch ist.

Die außen liegenden Profilnuten können dabei der Aufnahme von universellen Geräteträgern dienen, insbesondere als Befestigungshalter für beliebige Montagemöglichkeiten. Sie bieten darüber hinaus Befestigungsmöglichkeiten für zusätzliche Gerätekomponenten, wie Anzeigeelemente und Befehlsgeräte und dienen der Aufnahme von anderen Elementen, wie beispielsweise Design- oder Schutzblenden. Sie bieten aber auch Befestigungsmöglichkeiten für Gerätekomponenten, wie Schutzfilter und Schutzgläser für optische und mechanische Einwirkungen oder aber optische Anzeigen.

Die auf die Innenseite des Profils angeordneten Nuten dienen in erster Linie der Aufnahme von elektronischen Leiterplatten, sowie universellen, insbesondere optischen Komponenten, wie beispielsweise Linsensystemen als Einzellinsen oder Linsenblöcke. Die an den entsprechenden Stellen angeordneten Nuten dienen darüber hinaus aber auch der Aufnahme von Profilabdeckungen und von Dichtungskomponenten, wie beispielsweise einer Dichtschnur oder einem Abdichtungsprofil, als Schutz gegen das Eindringen von Staub, Wasser, etc..

Was den weiterhin an der Innenseite des Profils vorgesehenen Tunnel angeht, so dient dieser in erster Linie der Aufnahme einer elektronischen Leiterplatte oder einer Kabelführung. Alternativ dazu können in dem Tunnel aber auch optische Übertragungselemente eingesetzt werden, die als Informationsträger dienen.

Ausführungsbeispiele der Erfindung ergeben sich aus der folgenden Beschreibung mit Bezug auf die beigefügten Zeichnungen. Darin zeigt:
Figur 1 einen Querschnitts durch ein Lichtgitterprofil mit darin eingesetzter Frontabdekkung;
Figur 2 einen Querschnitt nach Figur 1 mit zusätzlicher Design-Schutzblende;
Figur 3 einen Querschnitt nach Figur 1 mit drei darin eingesetzten Bauteilen;
Figur 4 eine Seitenansicht auf die Ausführungsform eines Halteelementes für ein Profil nach Figur 1;
Figur 5 eine Draufsicht auf das Halteelement der Figur 3;
Figur 6 eine Draufsicht auf ein Abschlußelement zum Aufsatz auf das Profil nach Figur 1;
Figur 7 einen Querschnitt durch das Anschlußelement nach Figur 4;
Figur 8 eine Draufsicht auf ein mit dem Profil zu verwendendes optisches Element;
Figur 9 eine perspektivische Detailansicht des mit einem Abschlüsseelement versehen Endes des Profils nach Figur 1 mit Halteelement;
Figur 10 einen Schnitt durch eine Kugelgelenk-Halteeinrichtung; und
Figur 11 eine Seitenansicht der Kugelgelenk-Halteeinrichtung von Figur 10.

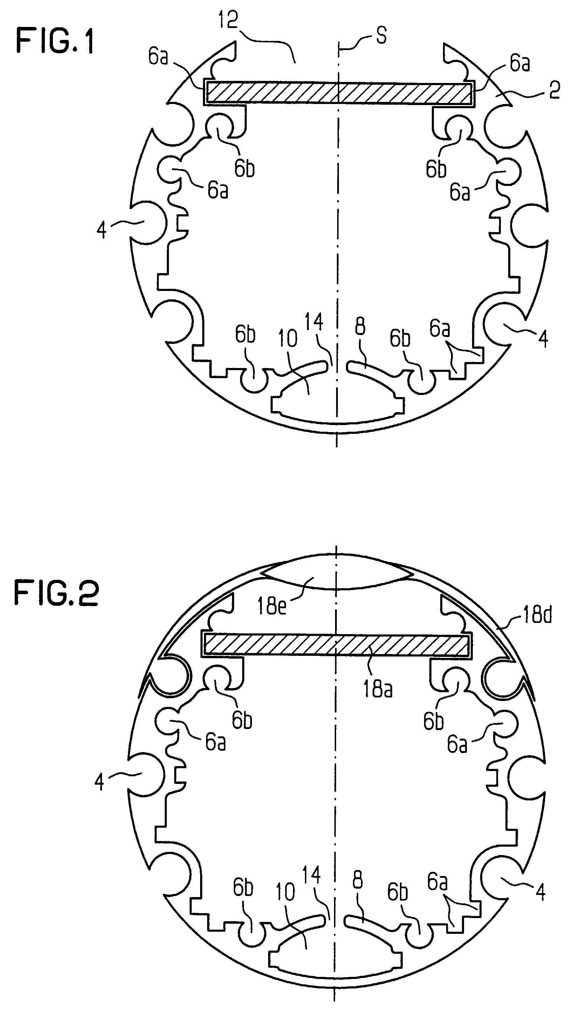

Die Figur 1 zeigt einen Querschnitt durch die Ausführungsform des ein Gehäuse bildenden und hier im wesentlichen runden Profils 2 einer Vorrichtung für den Aufbau von Schutzsystemen, insbesondere Lichtgittern, Lichtschranken, Lichtvorhänge, welches einerseits auf seiner Außenseite in der vorliegenden Ausführungsform rund ausgebildete Nuten 4 aufweist sowie auf seiner Innenseite teilweise runde Nuten 6b und teilweise eckige Nuten 6a. Das Profil 2 der dargestellten Ausführungsform ist, wie aus der Figur 1 ersichtlich, über einen Teilbereich 12 seines Umfangs offen ausgebildet, um es Signalen, die optisch dichte Materialien nicht durchdringen können, zu ermöglichen, aus dem Gehäuse in Richtung der Öffnung auszutreten oder einzudringen.

Wie in der Figur 1 weiterhin dargestellt ist, ist der Aufbau des Profils nach der Ausführungsform der Figur 1 zu der Linie S spiegelsymmetrisch. Wie in die Figur 1 schematisch angedeutet ist, ist das Profil ausgebildet, daß immer zwei der auf der Innenseite des Profils angeordneten Nuten 6a, 6b zueinander ausgerichtet sind, so daß sie zusammen eine Aufnahme für Leiterplatten, optische Bauteile, etc. wie schematisch dargestellt, bilden können. Die auf der Innenseite des Profils angeordneten Nuten 6a, 6b dienen in erster Linie der Aufnahme von elektronischen Leiterplatten 18c, sowie universellen, insbesondere optischen Komponenten, wie beispielsweise Linsensystemen. Insbesondere die angrenzend an den offenen Bereich 12 des Profils 2 angeordneten Nuten 6a dienen darüber hinaus aber auch der Aufnahme von Profilabdeckungen 18a oder von Dichtungskomponenten, wie beispielsweise einer Dichtschnur, als Schutz gegen das Eindringen von Staub, Wasser, etc..

Aufgrund der unterschiedlichen Abstände der innen liegenden einander gegenüber angeordneten Nuten 6a, 6b des Profils können unterschiedliche Größen von Bauelementen eingesetzt werden. Im Inneren des Profils ist über die Aufnahmenuten 6a, 6b hinaus dabei ein durch einen Profilsteg 8 abgegrenzter Tunnel 10 vorgesehen, der in der dargestellten Ausführungsform dem offenen Bereich 12 des Profils 2 gegenüber angeordnet ist. Der Profilsteg 8 zur Abgrenzung des Tunnels 10 ist dabei über einen Bereich 14 offen, so daß eventuell auf den Profilsteg 8 zur Abgrenzung des Tunnels 10 von dem offenen Bereich des Profils 12 her auftreffende optische Signale in das Innere des Tunnels 10 eindringen können.

Der Profilsteg 8 ist wie dargestellt daneben auf der zum Tunnelinneren gerichteten Seite parabolförmig ausgebildet, so daß beispielsweise eindringendes Licht gebündelt werden kann. Der Tunnel dient dabei in erster Linie der Aufnahme einer elektronischen Leiterplatte oder einer Kabelführung. Er kann aber auch optische Übertragungselemente, die als Informationsträger dienen, oder Lichtleiter oder Linsen aufnehmen.

Wie zu erkennen ist, ist bei der dargestellten Ausführungsform der offene Bereich 12 des Profils 2, der Tunnel 10 und der offene Bereich des Profilsteges 8 mittig auf der Spiegelebene S angeordnet. Die auf der Außenseite des Profils 2 liegenden Profilnuten 4 sind vorgesehen für die Aufnahme von universellen Geräteträgern und dienen als Befestigungshalter für beliebige Montagemöglichkeiten. Sie bieten darüber hinaus Befestigungsmöglichkeiten für zusätzliche Gerätekomponenten, wie Anzeigeelemente und Befehlsgeräte und dienen der Aufnahme anderer Elementen, wie beispielsweise Design- oder Schutzblenden 18d, in die Lichtfilter oder Linsen 18c eingesetzt sein können. Diese außen liegenden Nuten 4 können aber auch als Befestigungsmöglichkeiten für andere Gerätekomponenten, wie Schutzfilter und Schutzgläser für optische und mechanische Einwirkungen oder aber optische Anzeigen der Funktion der Vorrichtung beispielsweise in der Form von optischen Elementen oder dergleichen dienen.

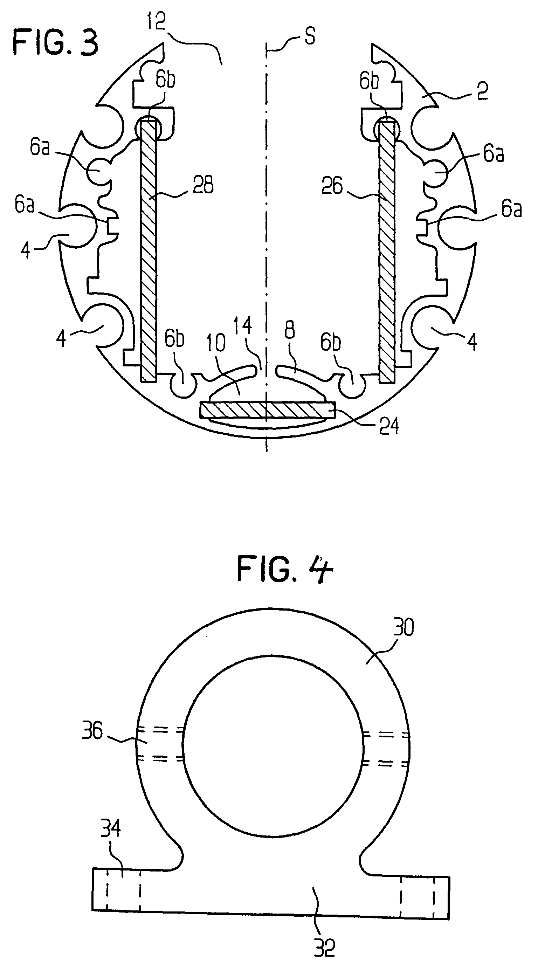

Auch die Figur 3 zeigt den Querschnitt des Profils 2 nach Figur 1, wobei in diesem Falle drei in jeweils zwei gegenüberliegende Nuten 6a und 6b beziehungsweise den Tunnel 10 eingesetzte Funktionselemente vorgesehen sind. In dem dargestellten Fall handelt es sich bei dem in den Tunnel 10 eingesetzten Funktionselement 24 um optische Komponenten, wie Lichtleiter oder Linsen. Bei den weiteren Funktionselementen 26 und 28 handelt es sich hingegen wiederum um Leiterplatten mit integrierten Auswertungen.

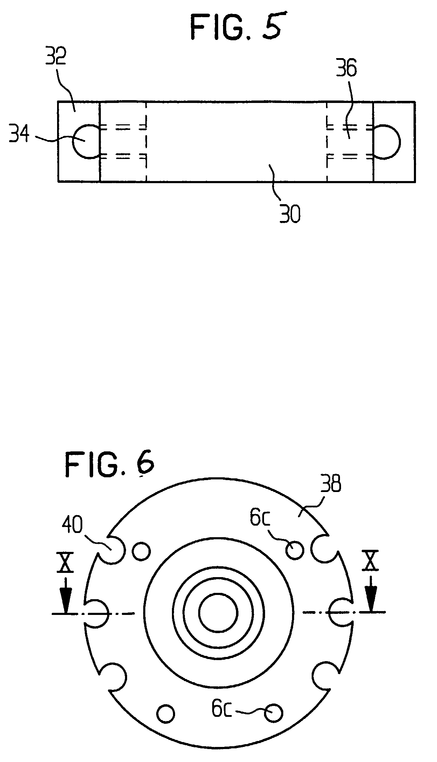

Die Figur 4 zeigt eine Ausführungsform eines mit dem Profil 2 aus Figur 1 zu verbindenden Halteelementes, das im wesentlichen aus einem auf das Ende des Profils 2 aufzusetzenden Ring 30 sowie einem damit verbundenen Sockel 32 besteht. In dem Sockel 32 sind Bohrungen 34 zur Befestigung an einer Wand oder dergleichen vorgesehen, wobei aber auch andere Möglichkeiten der Verbindung des Sockels mit einem Montageort, wie beispielsweise Verkleben, denkbar sind.

Wie der Figur 4 weiterhin zu entnehmen ist, sind in dem Ringbereich 30 vom Außenzum Innendurchmesser des Ringes 30 reichende und mit einem Gewinde versehene Bohrungen 36 vorgesehen, die beispielsweise mit der Aufnahme von Schrauben für die Fixierung von in den Innendurchmesser des Ringes 30 eingeführten Bauteilen dienen. Die Figur 5 zeigt das Halteelement nach Figur 4 in einer Draufsicht, wobei entsprechende Elemente mit entsprechenden Bezugszeichen versehen sind.

Figur 6 zeigt die Draufsicht aufein Abschlußelement 38, dessen Außenkontur derjenigen des Profils 2 nach Figur 1 mit den Nuten 4 entsprechenden Ausnehmungen 40 entspricht. Dieses Abschlußelement 38 wird auf die Enden des Profils 2 gesetzt, um eine abgeschlossene Einheit zu bilden, wobei durch die Entsprechung der Nuten 4 mit den Ausnehmungen 40 Anbauteile ohne Behinderung in die Nuten 4 des Profils 2 nach Figur 1 eingeschoben oder aus diesen entfernt werden können. Darüber hinaus sind durchgehende Bohrungen 6c vorgesehen, deren Anordnung derjenigen von den Nuten 6b im Profil 2 entspricht.

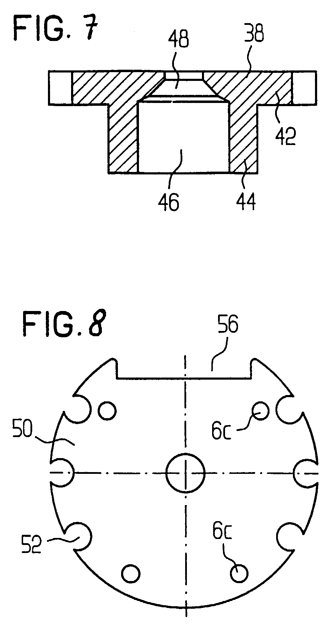

Die Figur 7 zeigt einen Querschnitt durch das Abschlußelement 38 nach Figur 6. Zu erkennen ist dabei ein flanschartiger Aufsetzbereich 42, dessen obere Seite auf einem Umfang des Profils 2 zum Liegen kommt oder als Kontaktfläche zu dem im folgenden beschriebenen Signalelement 50 dient. Das Abschlußelement weist dabei einen im montierten Zustand nach außen vorstehenden Bereich 44 auf, der mit einem Hohlraum 46 versehen ist.

Die Figur 8 zeigt ein ebenfalls auf das Ende des Profils 2 aufsetzbares Signalelement 50, dessen Außenkontur ebenfalls derjenigen des Profils 2 mit den Nuten 4 entsprechenden Ausnehmungen 52 entspricht. Das Signalelement weist daneben in demjenigen Bereich, der dem offenen Bereich 12 des Profils 2 entspricht, eine Ausnehmung 56 auf, deren Breite mit derjenigen des offenen Bereiches 12 des Profils 2 korrespondiert und ist ebenfalls mit den oben beschriebenen Bohrungen 6c versehen.

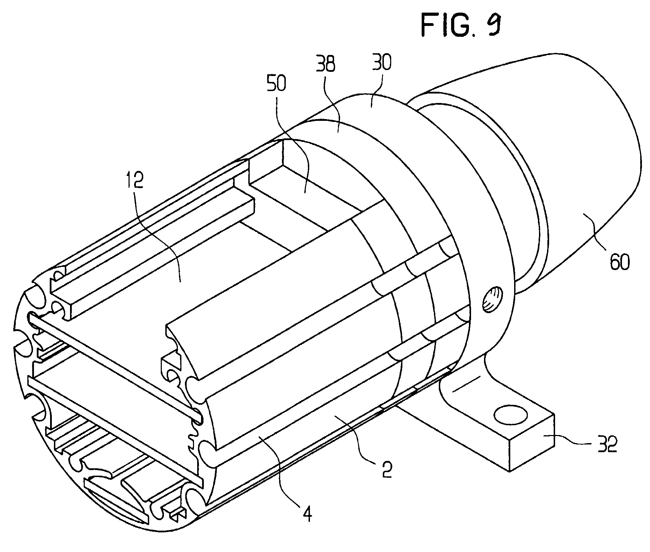

Die Figur 9 zeigt eine perspektivische Ansicht eines Endes des Profils 2 in einem mit dem Abschlußelement 38 sowie dem Halteelement 30, 32 zusammengebauten Zustand, wobei der offene Bereich 12 sowie die außen liegenden Nuten 4 des Profils 2 ebenfalls erkennbar sind. Es ist das Ende gezeigt, an dem in montiertem Zustand ein Abschlußelement 38 sowie ein Halteelement 30,32 angeordnet ist. Wie zu erkennen ist, sind dabei zwischen Abschlußelement 38 und dem eigentlichen Profil 2 eine Anzahl der oben beschriebenen Signalelemente 50 vorgesehen.

Wie der Figur 9 weiterhin zu entnehmen ist, kann in der Öffnung 46 des Abschlußelements 38 ein Dicht- und/oder Verbindungselement zur Signalübertragung, beispielsweise PG-Verschraubung 60, eingesetzt werden. Die Halterung des Profils 2 erfolgt dabei über das Abschlußelement 38 und das Halteelement 30, 32, wobei eine Drehung des Profils 2 gegenüber dem Halteelement 30, 32 um 360° ermöglicht ist.

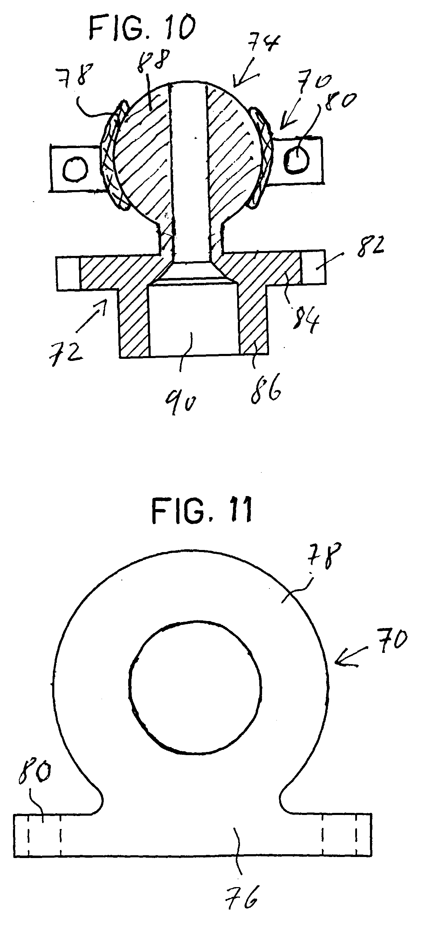

Die Figuren 10 und 11 zeigen im Schnitt bzw. in Seitenansicht eine Verbindung zwischen einem Halteelement 70 und einem Abschlußelement 72 über ein Kugelgelenk 74. Das Halteelement 70 umfaßt einen Sockel 76 und einen ringförmigen, nach außen gewölbten Lagerabschnitt 78, der den einen Bestandteil des Kugelgelenks 74 bildet. Am Sockel 76 des Halteelementes 70 sind Bohrungen 80 zur Befestigung des Halteelementes 70 an einem Montageort vorgesehen.

Das Abschlußelement 72, das in Figur 10 im Schnitt gezeigt ist, hat eine Außenkontur, die der des Profils 2 nach Figur 1 mit den Nuten 4 entsprechenden Ausnehmungen 82 entspricht. Die Ausnehmungen 82 sind an einem Flansch 84 vorgesehen, der mit einer Buchse 86 verbunden ist, die im montierten Zustand in das Profil hineinragt. Auf der der Buchse 86 gegenüberliegenden Seite des Abschlußelements 72 ist eine Kugel 88 vorgesehen, die in den Lagerabschnitt 78 des Halteelements 70 paßt und den zweiten Bestandteil des Kugelgelenks 74 darstellt. Ein Kanal 90 erstreckt sich durch das Abschlußelement 72 und die Kugel 88, um gegebenenfalls Zuleitungen zu den Bauteilen in dem Profil zu ermöglichen.

## Patentansprüche

1. Vorrichtung für den Aufbau von Schutzsystemen, insbesondere Lichtgittern, Lichtschranken, Lichtvorhänge oder dergleichen, mit einem Gehäuse, in dem Einrichtungen für die Abgabe oder den Empfang von Erfassungssignalen angeordnet sind, und das ein auf der Innen- und Außenseite mit einer Mehrzahl von Aufnahmenuten (4, 6) für die Aufnahme von Bauteilen und -gruppen versehenes Profil (2) ist, das über einen Teilbereich seines Querschnittes (12) offen ist **dadurch gekennzeichnet, daß** das Profil (2) über lösbar mit dem Profil (2) zu verbindende Halteelemente (30, 32; 70) am jeweiligen Montageort befestigbar ist und daß die jeweilige Verbindung zwischen Profil (2) und Halteelement (30, 32; 70) derart ausgebildet ist, daß eine Drehung des Profils (2) um seine Längsachse gegenüber dem Halteelement ermöglicht ist.

2. Vorrichtung nach Anspruch 1, **dadurch gekennzeichnet, daß** Drehung des Profils (2) um 360 ° um seine Längsachse gegenüber dem Halteelement ermöglicht ist.

3. Vorrichtung nach Anspruch 1, **dadurch gekennzeichnet, daß** im Inneren des Profils (2) über die Aufnahmenuten (6) hinaus ein durch einen Profilsteg (8) abgegrenzter Tunnel (10) vorgesehen ist, der dem offenen Bereich (12) des Profils (2) gegenüber angeordnet ist, und daß der Profilsteg (8) zur Abgrenzung des Tunnels (10) in einem Bereich (14) offen ist.

4. Vorrichtung nach Anspruch 3, **dadurch gekennzeichnet, daß** der Profilsteg (8) zur Abgrenzung des Tunnels (10) zumindest auf der zum Tunnelinneren gerichteten Seite parabolförmig ausgebildet ist.

5. Vorrichtung nach einem der vorhergehenden Ansprüche, **dadurch gekennzeichnet, daß** die Enden des Profils (2) mit Abschlußelementen (38, 72) verschlossen sind, die das Profil (2) bündig abschließen.

6. Vorrichtung nach Anspruch 5, **dadurch gekennzeichnet, daß** die Abschlußelemente (38, 72) zwischen Profil (2) und Halteelement (30, 32; 70) angeordnet sind, wobei die Halteelemente ringförmig auf den Abschlußkappen (38) aufsetzen.

7. Vorrichtung nach einem der vorherigen Ansprüche, **dadurch gekennzeichnet, daß** das Halteelement (70) und das Profil (2) beziehungsweise Abschlußelemente (72) über ein Kugelgelenk (74) miteinander verbunden sind.

8. Vorrichtung nach einem der vorherigen Ansprüche, **dadurch gekennzeichnet, daß** die Winkelstellung des Profils über einen motorischen Antrieb verstellbar ist.
